(19) Europäisches Patentamt
European Patent Office
Office européen des brevets

(11) Veröffentlichungsnummer: **0 008 644**
**B1**

(12) # EUROPÄISCHE PATENTSCHRIFT

(45) Veröffentlichungstag der Patentschrift: **21.04.82**

(51) Int. Cl.³: **C 08 L 79/08**

(21) Anmeldenummer: **79102459.9**

(22) Anmeldetag: **16.07.79**

(54) **Lagerstabile, heisshärtbare Mischungen auf Basis von Polyimiden und Poly-beta-iminocrotonsäurenitrilen und ihre Verwendung.**

(30) Priorität: **27.07.78 CH 8083/78**

(43) Veröffentlichungstag der Anmeldung: **19.03.80 Patentblatt 80/6**

(45) Bekanntmachung des Hinweises auf die Patenterteilung: **21.04.82 Patentblatt 82/16**

(84) Benannte Vertragsstaaten: **AT DE FR GB IT NL SE**

(56) Entgegenhaltungen:
**AT-B-316 871**
**DE-A1-2 529 092**

(73) Patentinhaber: **CIBA-GEIGY AG, Patentabteilung Postfach, CH-4002 Basel (CH)**

(72) Erfinder: **Haug, Theobald, Dr., Untere Flühackerstrasse 12, CH-4402 Frenkendorf (CH)**
Erfinder: **Kiefer, Jürg, Blumenstrasse 7, CH-4153 Reinach (CH)**

**EP 0 008 644 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Lagerstabile, heißhärtbare Mischungen auf Basis von Polyimiden und Poly-β-iminocrotonsäurenitrilen und ihre Verwendung

Die vorliegende Erfindung betrifft neue, lagerstabile und heißhärtbare Mischungen auf Basis von Polyimiden bestimmter ungesättigter Dicarbonsäuren und Poly-(β-iminocrotonsäurenitrilen) sowie ein Verfahren zur Herstellung von Formstoffen aus diesen härtbaren Mischungen.

Aus der DE-OS 2 529 092 ist es bereits bekannt, daß sich Mischungen aus Bis-maleinimiden und β-Aminocrotonsäurederivaten zu unschmelzbaren und unlöslichen Formstoffen mit wertvollen mechanischen Eigenschaften verarbeiten lassen. Diese härtbaren Mischungen sind jedoch mit dem Nachteil behaftet, daß sie in der Wärme eine zu kurze Gelierzeit aufweisen, um in der Praxis als Gießharze Anwendung finden zu können. Es wurde nun gefunden, daß sich Poly-(β-iminocrotonsäurenitrile) in Mischungen mit Bis-maleinimiden in der Wärme nicht nur besser handhaben und verarbeiten lassen, sondern aus diesen Mischungen auch Formstoffe mit vergleichsweise besseren mechanischen Eigenschaften erhalten werden.

Gegenstand der vorliegenden Erfindung sind somit neue lagerstabile, heißhärtbare Mischungen, die dadurch gekennzeichnet sind, daß sie enthalten

a) Poly-imide bestimmter ungesättigter Dicarbonsäuren der allgemeinen Formel I

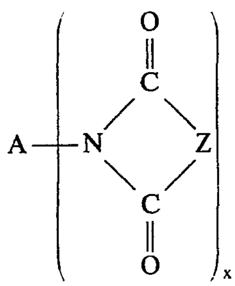

(I)

in der A einen x-wertigen organischen Rest mit mindestens 2 und höchstens 30 Kohlenstoffatomen bedeutet, Z für einen Rest der Formeln

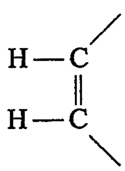

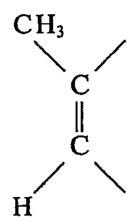

steht, und x die Zahl 2 oder 3 bedeutet, und

b) Poly-(β-iminocrotonsäurennitrile) der Formel II, III und/oder IV

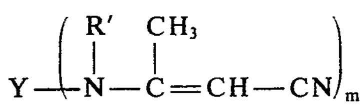

(II)

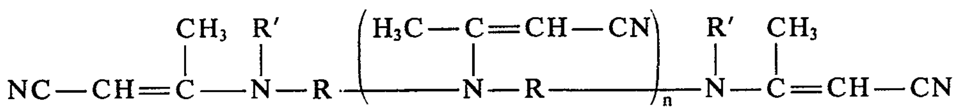

(III)

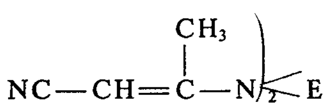

(IV)

worin Y einen m-wertigen organischen Rest mit mindestens 2 und höchstens 30 Kohlenstoffatomen, R' ein Wasserstoffatom, ein Alkyl mit 1 bis 6 Kohlenstoffatomen, Cycloalkyl mit 5 oder 6 Kohlenstoffatomen oder Aryl mit 6 bis 10 Kohlenstoffatomen, R einen aliphatischen oder aromatischen Rest mit bis zu 30 Kohlenstoffatomen, E zusammen mit den beiden Stickstoffatomen einen fünf- oder sechsgliedrigen Ring, m 2 oder 3 und n 1 oder 2 bedeuten.

Vorzugsweise enthalten die erfindungsgemäßen Mischungen

a) Poly-imide der Formel I, in der A einen Rest der Formeln

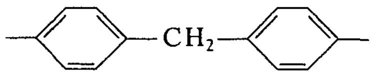 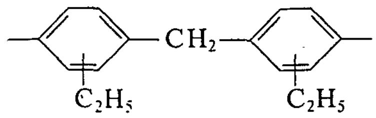

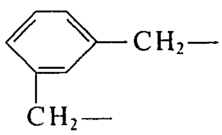 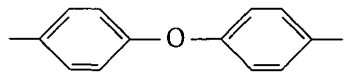

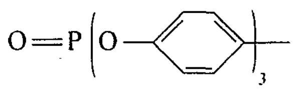 $-(CH_2)_p-$ p = 2–8

$-C_2H_4-S-C_2H_4-$ $-C_2H_4-O-C_2H_4-$

$-CH_2-C(CH_3)_2-C_2H_4-CH(CH_3)-CH_2-$

oder

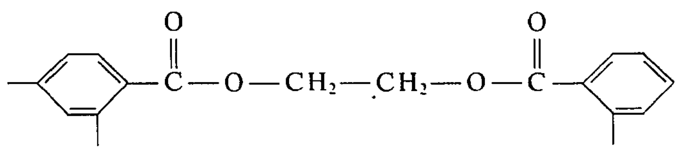

Z den Vinylenrest und x 2 oder 3 bedeuten, und

b) Poly-(β-iminocrotonsäurenitrile) der Formel II, III und/oder IV, worin Y einen Rest der Formeln

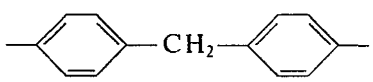 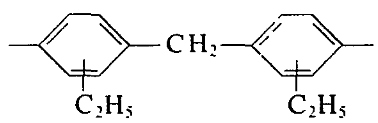

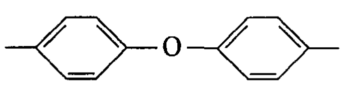 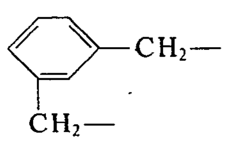

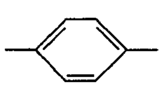 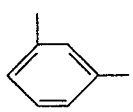

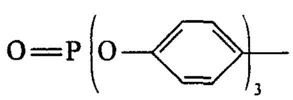 $-(CH_2)_p-$ p = 2–8

$-C_2H_4-S-C_2H_4-$ $-C_2H_4-O-C_2H_4-$

$-CH_2-C(CH_3)_2-C_2H_4-CH(CH_3)-CH_2-$

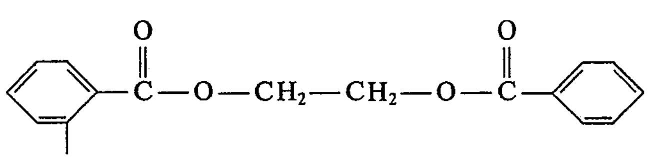

oder

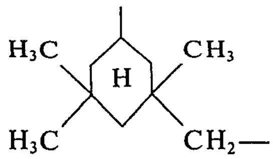

R' ein Wasserstoffatom, R den Äthylenrest und n gleich 1 bedeuten und die Gruppierung

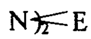

für den Rest der Formel

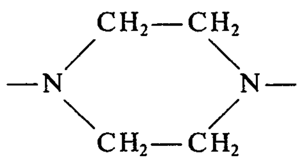

steht.

In einer besonderen Ausführungsform bestehen die erfindungsgemäßen Mischungen aus

a) Poly-imiden der Formel I und
b) Poly-(β-iminocrotonsäurenitrilen) der Formel II oder III, worin in der Formel I A einen Rest der Formeln

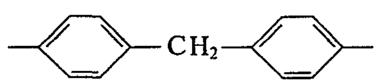
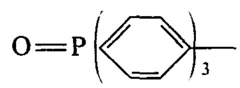
$-(CH_2)_6-$

oder

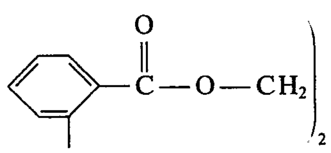

Z den Vinylenrest und x 2 oder 3 bedeuten, in der Formel II Y für einen Rest der Formeln

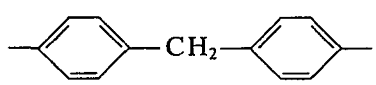
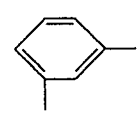
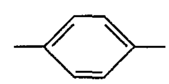

$CH_2-CH_2-$ $\quad -(CH_2)_6-$

oder

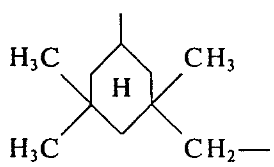

steht, R' ein Wasserstoffatom bedeutet und m für 2 steht und worin in der Formel III R Äthylen steht, R' ein Wasserstoffatom bedeutet und n für 1 steht.

Die Poly-imide der Formel I stellen eine bekannte Verbindungsklasse dar und können durch Anwendung der in der amerikanischen Patentschrift 3 010 290 und in der britischen Patentschrift 1 137 592 beschriebenen Methoden durch Umsetzen der entsprechenden Diamine mit den ungesättigten Dicarbonsäureanhydriden in einem polaren Lösungsmittel und in Gegenwart eines Katalysators hergestellt werden.

Das Symbol A in der Formel I kann einen linearen oder verzweigten Alkylenrest mit weniger als 20 Kohlenstoffatomen, einen Phenylenrest, einen Cyclohexylenrest oder einen Rest der Formel

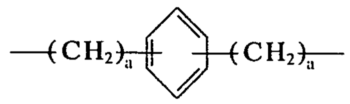

in der a eine ganze Zahl von 1 bis 3 darstellt, bedeuten.

Das Symbol A kann auch mehrere Phenylen- oder Cyclohexylenreste umfassen, die direkt oder durch eine einfache Valenzbindung oder durch ein Atom oder eine inerte Gruppe, wie beispielsweise Sauerstoff- oder Schwefelatome, Alkylengruppen mit 1 bis 3 Kohlenstoffatomen oder über folgende Gruppen $-CO-$, $-SO_2-$, $-NR-$ (R = Alkyl), $-N{=}N-$, $-CONH-$, $-COO-$, $-CONH-A-NHCO-$, $O{=}P(O-)_3$, $S{=}P(O-)_3$ verbunden sind.

Außerdem können die verschiedenen Phenylen- oder Cyclohexylen-Reste durch Methylgruppen substituiert sein.

Als spezielle Beispiele für Poly-imide der Formel I seien genannt:

N,N'-Äthylen-bis-maleinimid,
N,N'-Hexamethylen-bis-maleinimid,
N,N'-m-phenylen-bis-maleinimid,
N,N'-p-Phenylen-bis-maleinimid,
N,N'-4,4'-Diphenylmethan-bis-maleinimid,
N,N'-4,4'-3,3'-Dichlor-diphenylmethan-bis-maleinimid,
N,N'-4,4'-Diphenyläther-bis-maleinimid,
N,N'-4,4'-Diphenylsulfon-bis-maleinimid,
N,N'-4,4'-Dicyclohexylmethan-bis-maleinimid,
N,N'-$\alpha,\alpha'$-4,4'-Dimethylencyclohexan-bis-maleinimid,
N,N'-m-Xylylen-bis-maleinimid,
N,N'-p-Xylylen-bis-maleinimid,
N,N'-4,4'-Diphenylcyclohexan-bis-maleinimid,
N,N'-m-Phenylen-bis-citraconimid,
N,N'-4,4'-Diphenylmethan-bis-citraconimid,
N,N'-4,4'-2,2-Diphenylpropan-bis-maleinimid,
das N,N',N''-Trismaleinimid des Tris-(4-aminophenyl)-phosphats und
das N,N',N''-Trismaleinimid des Tris-(4-aminophenyl)-thiophosphats.

Man kann auch Mischungen von zwei oder mehreren dieser Polyimide verwenden.

Die N-Alkylen- oder N-Arylen-poly-($\beta$-iminocrotonsäurenitrile) der Formeln II bis IV gehören ebenfalls zu einer bekannten Verbindungsklasse und können nach den in »Journal für praktische Chemie«, Band 78 (1908), Seite 497, oder in »Berichte der Deutschen Chemischen Gesellschaft«, Band 60 (1927), Seite 1826, beschriebenen Verfahren hergestellt werden, indem man $\beta$-Aminocrotonsäurenitril mit Polyaminen der Formeln IIa bis IVa

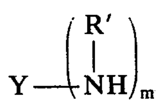 (II a)

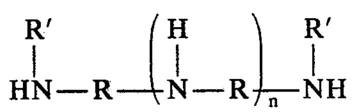 (III a)

$$HN{<}E{>}NH \qquad (IV\,a)$$

worin Y, R, R', m, n und E die gleiche Bedeutung wie in den Formeln II bis IV haben, unter Abspaltung von Ammoniak umsetzt.

Als Beispiele für Amine der Formel IIa seien genannt:

Äthylendiamin, Butylendiamin, Hexamethylendiamin, 2,4,4-Trimethylhexamethylendiamin, Octamethylendiamin, Decamethylendiamin, Dodecamethylendiamin, 2,2-Dimethyl-1,3-diaminopropan, 2,5-Dimethyl-1,5-diaminoheptan, 2,5-Dimethyl-1,6-diamino-hexan, 2,5-Dimethyl-1,7-diaminoheptan, 3,3,5-Trimethyl-1,6-diaminohexan, 1,2-Bis-(3-aminopropoxy)-äthan, 3-Methoxy-1,6-diaminohexan, $H_2N(CH_2)_3O(CH_2)_3NH_2$, $H_2N(CH_2)_3NH_2$, $H_2N-C_2H_4-S-C_2H_4-NH_2$, $H_2N(CH_2)_3N(CH_2)_3NH_2$, 4,4-Diamino-dicyclohexylmethan, 1,4-Diamino-cyclohexan,

m-Phenylendiamin, p-Phenylendiamin, 4,4'-Diamino-diphenylmethan, 3,3'-Dichlor-4,4'-diaminodiphenylmethan, Bis-(4-aminophenyl)-2,2-propan, 4,4'-Diamino-diphenyläther, 4,4'-Diaminodiphenylsulfon, 1,5-Diaminonaphthalin, m-Xylylendiamin, p-Xylylendiamin, Bis-($\gamma$-aminopropyl)-5,5-dimethyl-hydantoin, 4,4'-Diaminotriphenylphosphat, 3-Aminomethyl-3,5,5-trimethylcyclohexylamin (»Isophorondiamin«), 4,4'-Methylen-bis-(2-methylcyclohexylamin), 4-Amino-3-aminomethylpiperidin, N-substituierte 3-Amino-4-aminomethylpyrrolidine, Phenylindandiamin, 2,5-Di-($\omega$-aminoalkyl)-pyrazin, Bis-(p-amino-benzoesäureester) oder Bis-(anthranilsäureester) von aliphatischen Diolen sowie disekundäre Diamine, wie N,N'-Di-(cyclohexyl)-hexamethylendiamin oder N,N'-Di-(cyclopentyl)-hexamethylendiamin.

Als Beispiel für dreiwertige Amine der Formel IIa seien genannt:

1,2,4-Triaminobenzol, 1,3,5-Triaminobenzol, 2,4,6-Triaminotoluol, 2,4,6-Triamino-1,3,5-trimethylbenzol, 1,3,7-Triaminonaphthalin, 2,4,4'-Triaminodiphenyl, 3,4,6-Triaminopyridin, 2,4,4'-Triaminophenyläther, 2,4,4'-Triaminodiphenylmethan, 2,4,4'-Triaminodiphenylsulfon, 2,4,4'-Triaminobenzophenon, 2,4,4'-Triamino-3-methyl-diphenylmethan, N,N,N-Tri(4-aminophenyl)-amin, Tri-(4-aminophenyl)-methan, Tri-(4-aminophenyl)-phosphat, Tri-(4-aminophenyl)-phosphit, Tri-(4-aminophenyl)-thiophosphat sowie

$$O{=}P(O-CH_2-CH_2-NH_2)_3$$

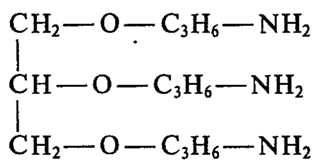

$$CH_3-CH_2-C(CH_2-O-C_3H_6-NH_2)_3$$

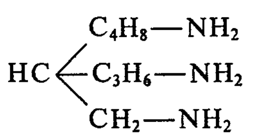

und 1,8-Diamino-4-aminomethyl-oktan.

Als Amine der Formel IIIa sind zum Beispiel die Dialkylentriamine und Trialkylentetramine geeignet, vorzugsweise solche mit einem 2 bis 6 Kohlenstoffatome enthaltenden Alkylenrest, wie zum Beispiel Diäthylentriamin, Triäthylentetramin, Dipropylentriamin, Tripropylentetramin oder Tributylentetramin.

Als Amine der Formel IVa seien Piperazin, Tetrahydropyridin und Imidazolidin genannt.

Das Mischungsverhältnis zwischen den Poly-imiden der Formel I und den $\beta$-Iminocrotonsäurenitrilen der Formeln II—IV kann in einem weiten Bereich variieren. Es wird so gewählt, daß die Anzahl der Äquivalente an $\beta$-Iminocrotonylgruppen höchstens gleich der Anzahl an äquivalenten Imidgruppen ist. Vorzugsweise ist in der härtbaren Mischung ein äquivalenter Überschuß an Imidgruppen, bezogen auf die Äquivalente $\beta$-Iminocrotonylgruppen vorhanden. Im härtbaren Gemisch kann ein bis zu 5facher Überschuß an Imidgruppenäquivalenten vorhanden sein. Vorzugsweise sind in den härtbaren Mischungen pro 1 Äquivalent $\beta$-Iminocrotonsäurenitril 1,3 bis 3 Äquivalente Maleinimidgruppen vorhanden.

Die Aushärtung der erfindungsgemäßen Mischungen erfolgt durch Erwärmen der Mischungen auf Temperaturen zwischen 50—280°C, vorzugsweise 150—250°C, wobei die Mischungen ohne Abgabe von flüchtigen Reaktionsprodukten in vernetzte, unlösliche und unschmelzbare Produkte übergehen.

Für manche technische Anwendung ist der Zusatz eines Härtungskatalysators vorteilhaft. Durch Zugabe von zum Beispiel einer geringen Menge eines organischen Peroxids oder Persalzes wird der ausgehärtete Zustand rascher erreicht. Dazu sind Verbindungen wie Di-tert.-butylperoxid, Dilaurylperoxid, tert.-Butylcumylperoxid oder tert.-Butylperbenzoat in einer Konzentration von 0,01—5 Prozent, vorzugsweise 0,15—0,5 Prozent, bezogen auf das Gesamtgewicht der härtbaren Mischung, geeignet. Es können jedoch auch andere, nicht peroxidische Härtungsbeschleuniger oder Zusätze, die

die Härtung günstig beeinflussen, eingesetzt werden.

Es ist auch möglich, aus den erfindungsgemäßen Mischungen erst ein Präpolymer herzustellen, indem man die homogen gemischten, gegebenenfalls fein vermahlenen Ausgangsmaterialien zeitweise auf 50—140° C erhitzt, so daß ein noch thermisch verformbares, teilweise lösliches Produkt entsteht. Dieses Präpolymer muß gegebenenfalls wieder zu einem verarbeitbaren Pulver vermahlen werden. Die Präpolymerisation kann auch durch Erhitzen einer Lösung oder Suspension der Ausgangsmaterialien erfolgen. Dazu kommen Substanzen in Frage, die mit den Ausgangsmaterialien nicht reagieren und die sie gewünschtenfalls genügend lösen. Solche Flüssigkeiten sind zum Beispiel:

Dimethylformamid, Tetramethylharnstoff, Dimethylsulfoxid, N-Methylpyrrolidon, Dichloräthylen, Tetrachloräthylen, Tetrachloräthan, Tetrabromäthan, Chlorbenzol, Dichlorbenzol, Brombenzol, Cyclohexanon, Dioxan oder alkylierte aromatische Kohlenwasserstoffe.

Die erfindungsgemäßen härtbaren Mischungen finden ihren Einsatz vor allem auf den Gebieten des Oberflächenschutzes, der Elektrotechnik, der Laminierverfahren und im Bauwesen. Sie können in jeweils dem speziellen Anwendungszweck angepaßter Formulierung, im ungefüllten oder gefüllten Zustand, gegebenenfalls in Form von Lösungen oder Dispersionen, als Lacke, Preßmassen, Sinterpulver, Tauchharze, Spritzgußformulierungen, Imprägnierharze, Bindemittel, Laminierharze, Schaumharz und insbesondere als Gießharz verwendet werden.

Gegenstand der Erfindung ist daher auch ein Verfahren zur Herstellung von vernetzten, unlöslichen und unschmelzbaren Kunststoffprodukten, dadurch gekennzeichnet, daß man Poly-imide bestimmter ungesättigter Carbonsäure der Formel I mit Poly-($\beta$-iminocrotonsäurenitrilen) der Formeln II—IV gegebenenfalls in Gegenwart eines Härtungskatalysators, bei Temperaturen zwischen 50 bis 280° C, vorzugsweise 150 bis 250° C, miteinander umsetzt.

Die erfindungsgemäße Herstellung der vernetzten, unschmelzbaren Produkte erfolgt in der Regel unter gleichzeitiger Formgebung zu Formkörpern, Flächengebilden, Laminaten, Verklebungen oder Schäumen. Dabei können den härtbaren Massen die in der Technologie der härtbaren Kunststoffe gebräuchlichen Zusätze, wie Füllstoffe, Weichmacher, Pigmente, Farbstoffe, Formtrennmittel, Treibmittel, flammhemmende Stoffe, zugesetzt werden. Als Füllstoffe können zum Beispiel Glasfasern, Glimmer, Quarzmehl, Kaolin, kolloidales Siliziumdioxid oder Metallpulver verwendet werden; als Formtrennmittel kann zum Beispiel Calciumstearat dienen und als Treibmittel können beispielsweise Azodicarbonsäureamide, $\alpha,\alpha'$-Azoisobuttersäurenitril oder organische Sulfohydrazide verwendet werden. Das Treibmittel wird je nach Art in Mengen von 0,5—15 Gewichts-%, bezogen auf die Gesamtmenge des Gemisches, eingesetzt.

Wird aus den härtbaren Mischungen zuerst ein Präpolymer hergestellt, so kann dieses, zu einem feinen Pulver vermahlen, nach dem Wirbelsinterverfahren als Oberflächenschutzmittel verwendet werden. Eine Lösung oder Suspension des Präpolymeren in einem geeigneten Lösungsmittel kann zur Herstellung von Laminaten dienen, indem man poröse Flächengebilde wie Gewebe, Fasermatten oder Faservliese, besonders Glasfasermatten oder Glasfasergewebe, mit Lösungen oder Suspensionen imprägniert und das Lösungsmittel durch einen Trocknungsvorgang entfernt. Die weitere Härtung erfolgt in einer Presse bei vorzugsweise 170—250° C und 49—1962 · $10^4$ Pa Druck. Es ist auch möglich, die Laminate in der Presse nur vorzuhärten und die so erhaltenen Produkte in einem Ofen bei 200—280° C bis zum Erreichen optimaler Gebrauchseigenschaften nachzuhärten.

Tabelle 1

Vergleich der Gelierzeit von erfindungsgemäßen Mischungen* aus Bis-maleinimiden und Bis-(β-iminocrotonsäurenitrilen) mit Mischungen gemäß DE-OS 2 529 092 aus Bis-maleinimiden und Bis-(β-amino-crotonsäureestern bzw. -amiden)

| Mischung Nr. | Maleinimid | Crotonsäurederivat | Gelierzeit bei 150°C [Minuten + Sekunden] |
|---|---|---|---|
| 1* | 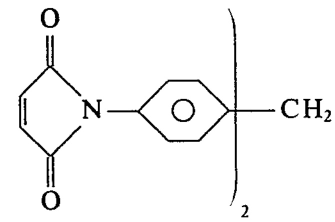 | 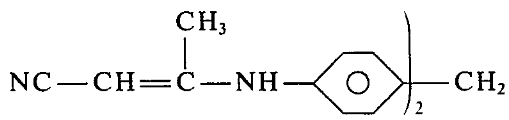 | 4'15" |
| 2* | do. | 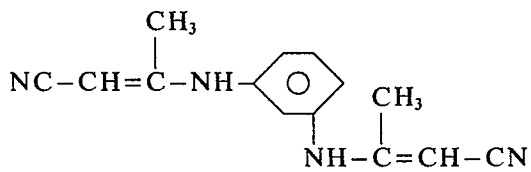 | 3'55"[1]) |
| 3* | 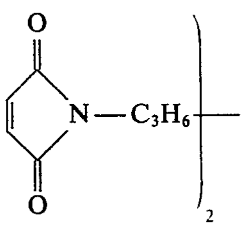 | 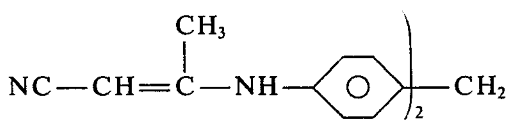 | 25' |
| 4* | do. | 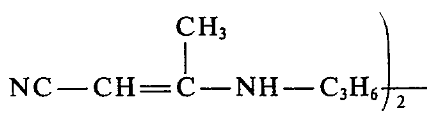 | 4'25" |
| 5 | 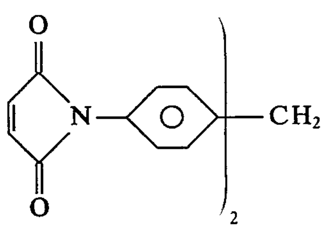 | 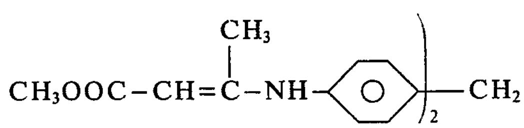 | 0'20" |
| 6 | do. | 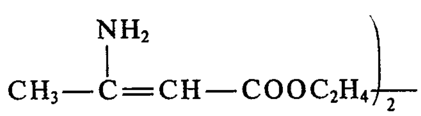 | 0'7" |
| 7 | 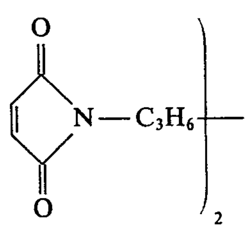 | 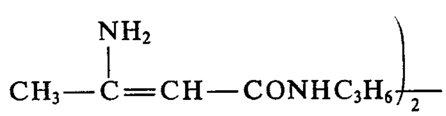 | 0'5" |

[1]) Bei 160°C.

## Beispiel 1

63,5 g (0,23 Mol) N,N'-Hexamethylen-bis-maleinimid (im folgenden als »Bis-imid I« bezeichnet) und 38,0 g (0,15 Mol) N,N'-Diphenylenmethan-bis-(β-iminocrotonsäurenitril) werden gemischt, bei 150°C aufgeschmolzen und im Vakuum entgast. Die Schmelze wird in eine heiße Form mit den Maßen 135 × 135 × 4 mm gegossen und durch stufenweises Härten bei 140°C/4 Studen, 160°C/4 Stunden, 180°C/10 Stunden, 200°C/3 Stunden und 220°C/1 Stunde in eine harte, durchsichtige Platte verwandelt, deren Prüfdaten in Tabelle 2 angegeben sind.

## Beispiel 2

69,7 g (0,25 Mol) Bis-imid I und 30,0 g (0,125 Mol) N,N'-1,3-Phenylen-bis-(β-iminocrotonsäurenitril) werden gemischt und wie in Beispiel 1 in eine klardurchsichtige Platte verwandelt, deren Prüfdaten in Tabelle 2 angegeben sind.

## Beispiel 3

44,2 g (0,16 Mol) Bis-imid I und 19,7 g (0,08 Mol) N,N'-Hexamethylen-bis-(β-iminocrotonsäurenitril) werden gut gemischt. 8,2 g dieser Mischung werden in eine 150°C heiße, rechteckige Metallform mit den Innenmaßen 60 × 28 mm gegeben, weitere 5 g dieser Mischungen werden in eine 160°C heiße, runde Metallform mit dem Durchmesser 50 mm gegeben. Das Gemisch schmilzt rasch zu einer homogenen Flüssigkeit zusammen, die durch Härten bei 160°C/6 Stunden und 180°C/2 Stunden in einen rechteckigen Formkörper mit den Maßen 60 × 28 × 4 mm bzw. einen scheibenförmigen Formkörper mit dem Durchmesser 50 mm und einer Dicke von etwa 2 mm verwandelt wird. Die Prüfdaten sind in Tabelle 2 aufgeführt.

## Beispiel 4

33,1 g (0,12 Mol) Bis-imid I und 11,4 g (0,06 Mol) N,N'-Äthylen-bis-(β-iminocrotonsäurenitril) werden wie in Beispiel 3 gut gemischt und in rechteckige bzw. scheibenförmige Prüfkörper überführt, deren Meßdaten in Tabelle 2 aufgeführt sind.

## Beispiel 5

16,4 g (0,06 Mol) Bis-imid I und 12,0 g (0,04 Mol) N,N'-Isophoron-bis-(β-iminocrotonsäurenitril) werden wie in Beispiel 3 gut gemischt und in rechteckige bzw. scheibenförmige Prüfkörper überführt, deren Meßdaten in Tabelle 2 aufgeführt sind.

## Beispiel 6

16,6 g (0,06 Mol) Bis-imid I, 18,4 g (0,04 Mol) Äthylenglykol-bis-(2-maleinimido-benzoesäureester), 5,95 g (0,025 Mol) N,N'-1,4-Phenylen-bis-(β-iminocrotonsäurenitril) und 8,20 g (0,025 Mol) N,N'-4,4-Diphenylmethan-bis-(β-iminocrotonsäurenitril) werden gut gemischt und wie in Beispiel 3 in rechteckige bzw. scheibenförmige Prüfkörper überführt, die noch 1,5 Stunden bei 200°C nachgehärtet werden. Die Meßdaten sind in Tabelle 2 aufgeführt.

## Beispiel 7

24,8 g (0,09 Mol) Bis-imid I und 12,0 g (0,04 Mol) des Tris-(β-iminocrotonsäurenitrils), hergestellt aus Diäthylentriamin und β-Aminocrotonsäurenitril, werden gut gemischt und wie in Beispiel 3 in rechteckige und scheibenförmige Prüfkörper überführt, die wie in Beispiel 6 nachgehärtet werden. Die Prüfdaten sind in Tabelle 2 aufgeführt.

## Beispiel 8

35,8 g (0,1 Mol) N,N'-4,4'-Diphenylmethan-bis-maleinimid, 11,0 g (0,033 Mol) N,N'-4,4'-Diphenylmethan-bis-(β-iminocrotonsäurenitril), 47,0 g gemahlene Glasfasern und 1,2 g Calcium-stearat werden in einer Kugelmühle gut gemischt. In einer auf 160°C vorgeheizten Form werden Prüfkörper mit den

Maßen 60 x 10 x 4 mm bzw. Scheiben mit einem Durchmesser von 50 mm und einer Dicke von 2 mm hergestellt, indem man die benötigte Menge des Gemisches in diese Formen gibt und dieses bei einer Temperatur von 160° C und einem Preßdruck von ca. 3923 · $10^4$ Pa in harte Formkörper überführt. Diese werden außerhalb der Form nachgehärtet bei 160° C/1 Stunde, 180° C/3 Stunden, 200° C/6 Stunden und 220° C/2 Stunden. Die Meßdaten dieser Prüfkörper sind in Tabelle 2 aufgeführt.

Beispiel 9

35,8 g (0,10 Mol) N,N'-4,4'-Diphenylmethan-bis-maleinimid, 12,3 g (0,15 Mol) N,N'-Hexamethylen-bis-(β-iminocrotonsäurenitril) und 48,1 g gemahlene Glasfasern werden wie in Beispiel 8 gemischt und Prüfkörper daraus hergestellt; ihre Prüfdaten sind in Tabelle 2 aufgeführt.

Beispiel 10

122 g (0,20 Mol) des N,N',N''-Trismaleinimids von Tris-(4-aminophenyl)-phosphat, 65 g (0,20 Mol) N,N'-4,4'-Diphenylmethan-bis-(β-iminocrotonsäurenitril), 502 g Quarzmehl und 3,5 g OP-Wachs (Esterwachs auf Basis eines gebleichten und modifizierten Montanwachses, technisches Produkt) werden in einer Kugelmühle intensiv gemischt. Bei einer Preßtemperatur von 170° C und einem Preßdruck von ca. 2256 · $10^4$ Pa werden aus dieser Mischung Platten mit den Maßen 140 x 140 x 4 mm gepreßt. Die mechanischen Prüfdaten dieses Formkörpers sind in Tabelle 2 aufgeführt.

Tabelle 2

| | Beispiel 1 | 2 | 3 | 4 | 5 | 6 | 7 | 8 | 9 | 10 |
|---|---|---|---|---|---|---|---|---|---|---|
| Biegefestigkeit nach nach VSM*) 77103 (Pa) | 13,49 | 15,33 | 15,98 | 9,35 | 6,77 | 7,78 | 5,79 | 8,12 | 7,60 | 5,66 |
| Durchbiegung (mm) | 6,3 | 7,1 | 10,0 | 3,0 | 2,8 | 3,2 | 2,0 | 1,1 | 1,75 | 0,47 |
| Schlagbiegefestigkeit nach VSM 77105 ($kJ/m^2$) | 26,8 | 19,4 | | | 3,07 | 4,9 | 2,7 | 3,6 | | 1,3 |
| Formbeständigkeit in der Wärme nach ISO/R 75**) (°C) | 211 | 214 | | | | | | | | 246 |
| Dielektrischer Verlustfaktor $tg\delta \cdot 10^2$ bei 50 Hz, 23°C | 0,55 | | 0,40 | 0,37 | 0,75 | 0,50 | 1,38 | 0,63 | | |
| Dielektrizitätskonstante $\varepsilon_R$ bei 50 Hz, 23°C | 3,6 | | 3,7 | | 4,3 | 4,1 | 4,4 | 4,9 | | |
| Spezifischer Durchgangswiderstand ($\Omega \cdot cm$) | $4,5 \cdot 10^{16}$ | | $1,2 \cdot 10^{15}$ | $3,3 \cdot 10^{15}$ | $4,8 \cdot 10^{15}$ | $2,2 \cdot 10^{15}$ | $2,2 \cdot 10^{15}$ | $1,2 \cdot 10^{16}$ | | |

*) VSM: Normen des Vereins Schweizerischer Maschinenindustrieller.
**) ISO/R: Normen des Internation Standard Organization/Recommendation.

**Patentansprüche**

1. Lagerstabile, heißhärtbare Mischungen, dadurch gekennzeichnet, daß sie enthalten

a) Poly-imide bestimmter ungesättigter Dicarbonsäuren der allgemeinen Formel I

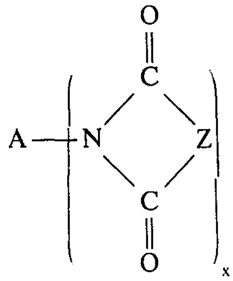

(I)

in der A einen x-wertigen organischen Rest mit mindestens 2 und höchstens 30 Kohlenstoffatomen bedeutet, Z für einen Rest der Formeln

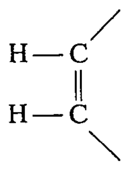

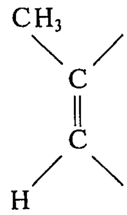

steht, und x die Zahl 2 oder 3 bedeutet, und

b) Poly-(β-iminocrotonsäurenitrile) der Formel II, III und/oder IV

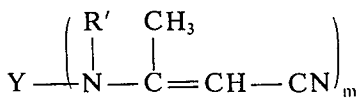

(II)

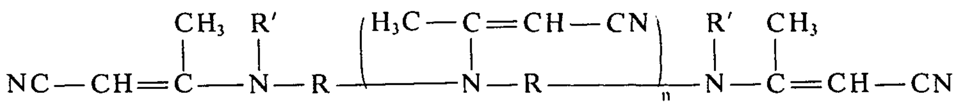

(III)

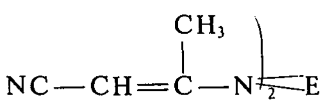

(IV)

worin Y einen m-wertigen organischen Rest mit mindestens 2 und höchstens 30 Kohlenstoffatomen, R' ein Wasserstoffatom, ein Alkyl mit 1 bis 6 Kohlenstoffatomen, Cycloalkyl mit 5 oder 6 Kohlenstoffatomen oder Aryl mit 6 bis 10 Kohlenstoffatomen, R einen aliphatischen oder aromatischen Rest mit bis zu 30 Kohlenstoffatomen, E zusammen mit den beiden Stickstoffatomen einen fünf- oder sechsgliedrigen Ring, m 2 oder 3 und n 1 oder 2 bedeuten.

2. Mischungen gemäß Anspruch 1, dadurch gekennzeichnet, daß sie enthalten

a) Poly-imide der Formel I, in der A einen Rest der Formeln

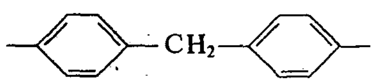

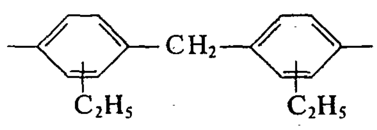

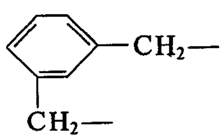

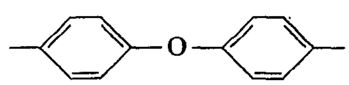

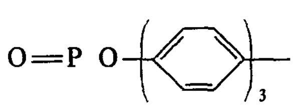

$-(CH_2)_p-$ p = 2–8

$-C_2H_4-S-C_2H_4-$ $-C_2H_4-O-C_2H_4-$

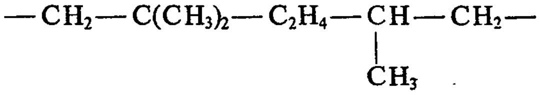

oder

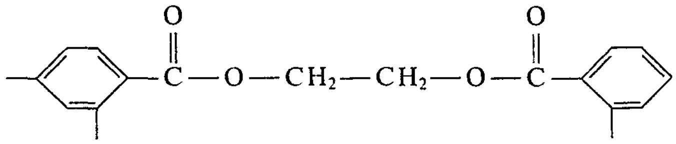

Z den Vinylenrest und x 2 oder 3 bedeuten, und

b) Poly-(β-iminocrotonsäurenitrile) der Formel II, III und/oder IV, worin Y einen Rest der Formeln

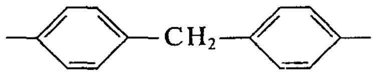
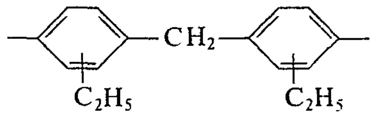

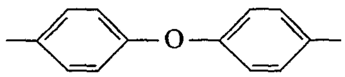
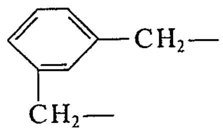

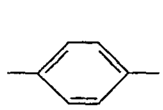
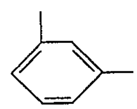

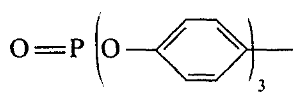 $-(CH_2)_p-$ p = 2–8

$-C_2H_4-S-C_2H_4-$ $-C_2H_4-O-C_2H_4-$

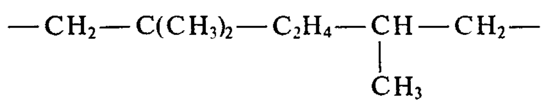

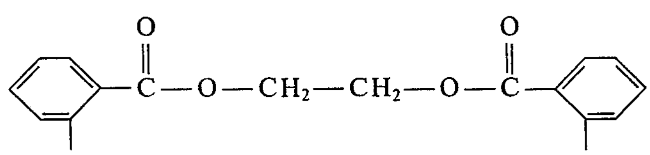

oder

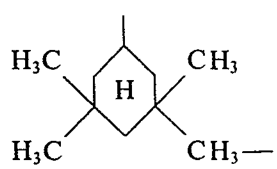

R' ein Wasserstoffatom, R den Äthylenrest und n gleich 1 bedeuten und die Gruppierung

$N \frac{1}{2} = E$

für den Rest der Formel

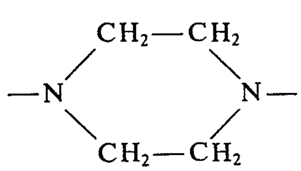

steht.

3. Mischungen gemäß Anspruch 1 oder 2, dadurch gekennzeichnet, daß sie

a) Poly-imide der Formel I und
b) Poly-($\beta$-iminocrotonsäurenitrile) der Formel II oder III enthalten.

4. Mischungen gemäß Anspruch 1, dadurch gekennzeichnet, daß in der Mischung pro 1 Äquivalent $\beta$-Iminocrotonsäurenitril 1 bis 5 Äquivalente Maleinimidgruppen vorhanden sind.

5. Mischungen gemäß Anspruch 4, dadurch gekennzeichnet, daß pro 1 Äquivalent $\beta$-Iminocrotonsäurenitril 1,3 bis 3 Äquivalente Maleinimidgruppen vorhanden sind.

6. Mischungen gemäß Anspruch 1, dadurch gekennzeichnet, daß sie als Polyimid der Formel I N,N'-Hexamethylen-bis-maleinimid, N,N'-4,4'-Diphenylmethan-bis-maleinimid oder das N,N',N''-Tris-maleinimid von Tris-(4-aminophenyl)-phosphat enthalten.

7. Mischungen gemäß Anspruch 1, dadurch gekennzeichnet, daß sie als Poly-($\beta$-iminocrotonsäurenitril) der Formel II N,N'-4,4'-Diphenylmethan-bis-($\beta$-iminocrotonsäurenitril), N,N'-1,3-Phenylen-bis-($\beta$-iminocrotonsäurenitril, N,N'-1,4-Phenylen-bis-($\beta$-iminocrotonsäurenitril), N,N'-Hexamethylen-bis-($\beta$-iminocrotonsäurenitril), N,N'-Äthylen-bis-($\beta$-iminocrotonsäurenitril) oder N,N'-Isophoron-bis-($\beta$-iminocrotonsäurenitril) enthalten.

8. Mischungen gemäß Anspruch 1, dadurch gekennzeichnet, daß sie als Poly-($\beta$-iminocrotonsäurenitril) der Formel III das Tris($\beta$-iminocrotonsäurenitril) des Diäthylentriamins enthalten.

9. Verfahren zur Herstellung von unlöslichen und unschmelzbaren Kunststoffprodukten aus den härtbaren Mischungen gemäß Anspruch 1, dadurch gekennzeichnet, daß man diese Mischungen bei Temperaturen zwischen 50—280°C, gegebenenfalls in Gegenwart eines Härtungskatalysators, umsetzt.

**Claims**

1. A heat-curable mixture which is stable on storage, which contains a) one or more poly-imides of specific unsaturated dicarboxylic acids of the general formula I

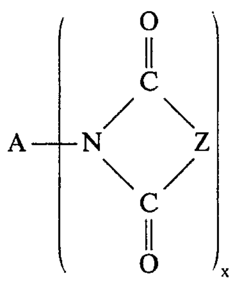
(I)

in which A is a x-valent organic radical having at least 2 and not more than 30 carbon atoms, Z is a radical of the formula

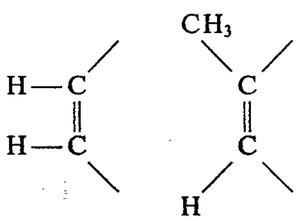

and x is the number 2 or 3, and b) one or more poly-($\beta$-iminocrotononitriles) of the formula II, III and/or IV

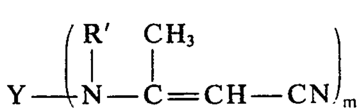
(II)

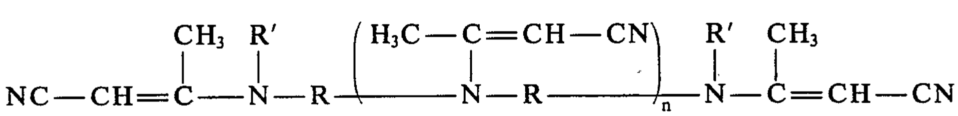
(III)

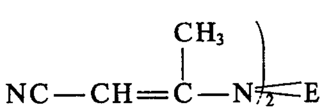
(IV)

in which Y is a m-valent organic radical having at least 2 and not more than 30 carbon atoms, R' is a hydrogen atom or an alkyl having 1 to 6 carbon atoms, cycloalkyl having 5 or 6 carbon atoms or aryl having 6 to 10 carbon atoms, R is an aliphatic or aromatic radical having not more than 30 carbon atoms, E, together with the two nitrogen atoms, is a five-membered or six-membered ring, m is 2 or 3 and n is 1 or 2.

2. A mixture according to claim 1, which contains a) one or more poly-imides of the formula I, in which A is a radical of the formulae

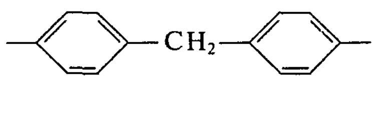
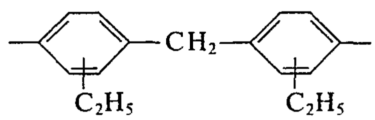

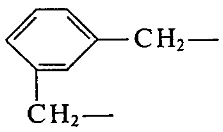
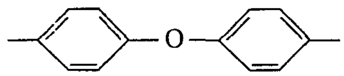

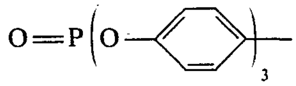
$-(CH_2)_p-$ p = 2–8

$—C_2H_4—S—C_2H_4—$ $—C_2H_4—O—C_2H_4—$

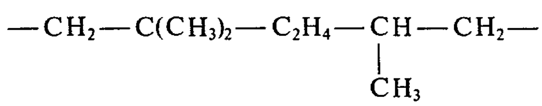

or

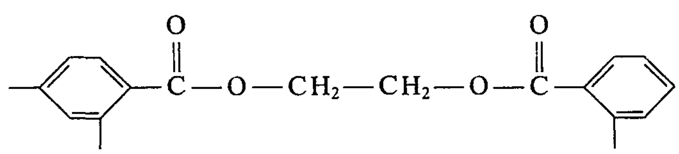

Z is the vinylene radical and x is 2 or 3, and b) one or more poly-(β-iminocrotononitriles) of the formula II, III and/or IV, in wich Y is a radical of the formulae

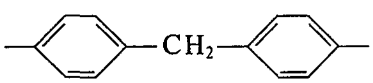
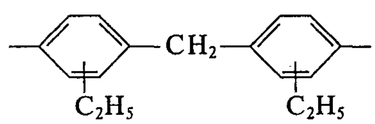

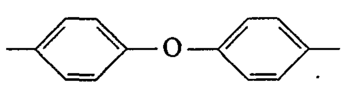
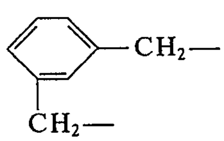

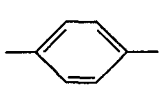
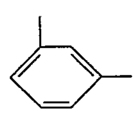

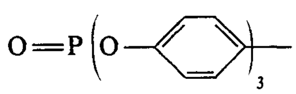
$-(CH_2)_p-$ p = 2–8

$—C_2H_4—S—C_2H_4—$ $—C_2H_4—O—C_2H_4—$

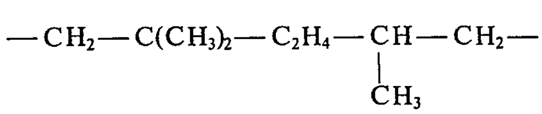

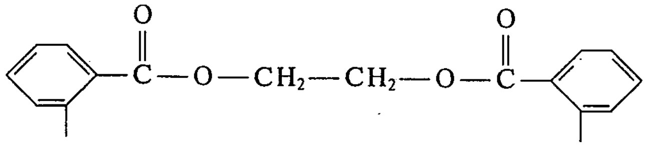

or

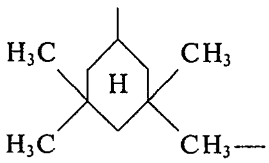

R' is a hydrogen atom, R is the ethylene radical and n is 1 and the grouping

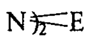

is the radical of the formula

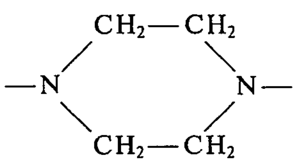

3. A mixture according to claim 1, which contains a) one or more poly-imides of the formula I and b) one or more poly-($\beta$-iminocrotononitriles) of the formula II or III.

4. A mixture according to claim 1, wherein 1 to 5 equivalents of maleimide groups are present per 1 equivalent of $\beta$-iminocrotononitrile in the mixture.

5. A mixture according to claim 1, wherein 1.3 to 3 equivalents of maleimide groups are present per 1 equivalent of $\beta$-iminocrotononitrile.

6. A mixture according to claim 1, which contains, as the poly-imide of the formula I, N,N'-hexamethylene-bis-maleimide, N,N'-4,4'-diphenylmethane-bis-maleimide or the N,N',N''-tris-maleimide of tris-(4-aminophenyl) phosphate.

7. A mixture according to claim 1, which contains, as a poly-($\beta$-iminocrotononitrile) of the formula II, N,N'-4,4'-diphenylmethane-bis-($\beta$-iminocrotononitrile), N,N'-1,3-phenylene-bis-($\beta$-iminocrotononitrile), N,N'-1,4-phenylene-bis-($\beta$-iminocrotononitrile), N,N'-hexamethylene-bis-($\beta$-iminocrotononitrile), N,N'-ethylene-bis-($\beta$-iminocrotononitrile) or N,N'-isophorone-bis-($\beta$-iminocrotononitrile).

8. A mixture according to claim 1, which contains, as a poly-($\beta$-iminocrotononitrile) of the formula III, the tris-($\beta$-iminocrotononitrile) of diethylenetriamine.

9. A process for the preparation of an insoluble and infusible plastic product from a curable mixture according to claim 1, which comprises reacting this mixture at temperatures between 50 and 280°C, if desired in the presence of a curing catalyst.

**Revendications**

1. Mélanges thermodurcissables se conservant bien, caractérisés en ce qu'ils contiennent:

a) des poly-imides dérivant de certains acides dicarboxyliques insaturés répondant à la formule générale I

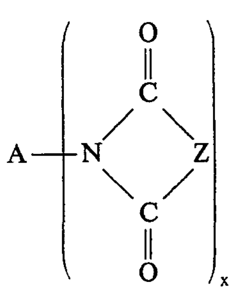

(I)

dans laquelle

A représente un radical organique de valence égale à x qui contient au moins 2 et au plus 30 atomes de carbone,

Z représente un radical répondant à l'une des formules

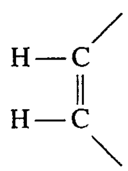

et

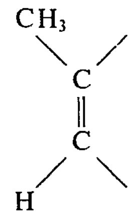

et

x désigne le nombre 2 ou le nombre 3, et

b) des poly-($\beta$-iminocrotononitriles) de formules II, III et/ou IV

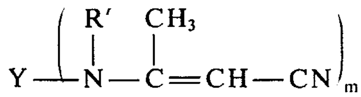

(II)

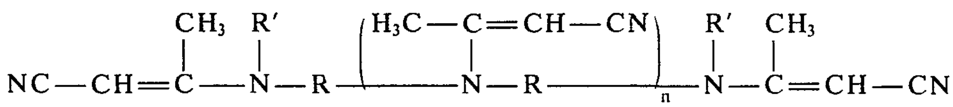

(III)

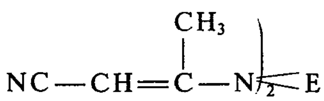

(IV)

dans lesquelles

Y représente un radical organique de valence égale à m qui contient au moins 2 et au plus 30 atomes de carbone,

R' représente un atome d'hydrogène, un alkyle contenant de 1 à 6 atomes de carbone, un cycloalkyle contenant 5 ou 6 atomes de carbone ou un aryle contenant de 6 à 10 atomes de carbone,

R représente un radical aliphatique ou aromatique contenant au plus 30 atomes de carbone,

E représente, avec les deux atomes d'azote, un noyau pentagonal ou hexagonal,

m est égal à 2 ou à 3 et

n est égal à 1 ou à 2.

2. Mélanges selon la revendication 1, caractérisés en ce qu'ils contiennent:

a) des poly-imides de formule I dans lesquels A représente un radical répondant à l'une des formules:

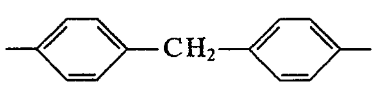

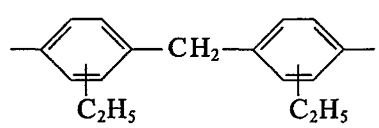

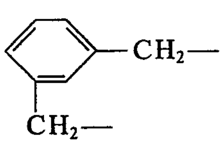

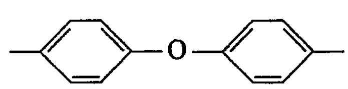

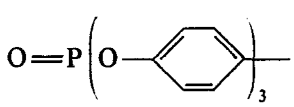

$-(CH_2)_p-$ p = 2 à 8

$-C_2H_4-S-C_2H_4-$ $-C_2H_4-O-C_2H_4-$

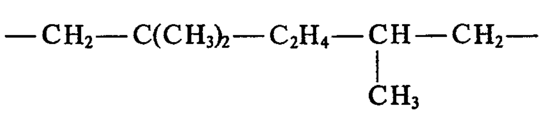

et

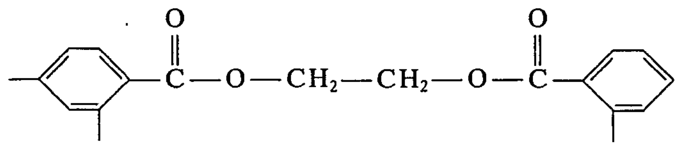

Z représente le radical vinylène et x est égal à 2 ou à 3, et,

b) des poly-($\beta$-imino-crotononitriles) de formules II, III et/ou IV dans lesquels Y représente un radical répondant à l'une des formules:

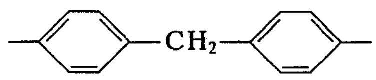

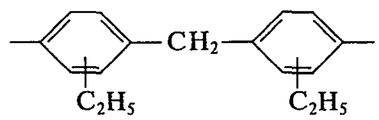

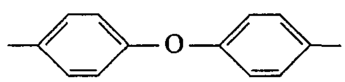

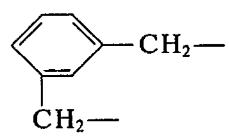

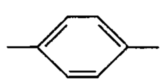

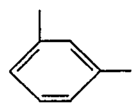

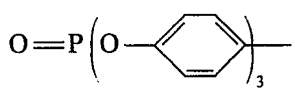

$-(CH_2)_p-$ p = 2 à 8,

$-C_2H_4-S-C_2H_4-$ $-C_2H_4-O-C_2H_4-$

$-CH_2-C(CH_3)_2-C_2H_4-CH-CH_2-$
$CH_3$

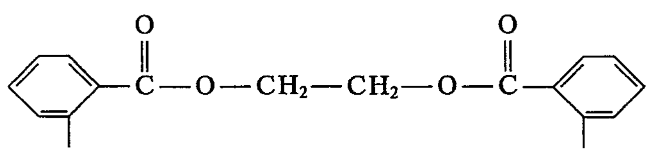

et

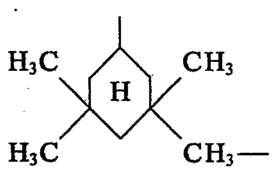

R' représente un atome d'hydrogène, R le radical éthylène et n est égal à 1 et le groupement N$\frac{1}{2}$E désigne le radical de formule:

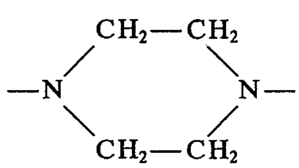

3. Mélanges selon l'une des revendications 1 et 2, caractérisés en ce qu'ils contiennent:

a) des poly-imides de formule I et

b) des poly-($\beta$-imino-crotononitriles) de formule II ou III.

4. Mélanges selon la revendication 1, caractérisés en ce qu'il y a, dans le mélange, pour 1 équivalent de $\beta$-imino-crotononitrile, de 1 à 5 équivalents de groupes maléimides.

5. Mélanges selon la revendication 4, caractérisés en ce qu'il y a, pour 1 équivalent de $\beta$-imino-crotononitrile, de 1,3 à 3 équivalents de groupes maléimides.

6. Mélanges selon la revendication 1, caractérisés en ce qu'ils contiennent, comme poly-imide de formule I, le N,N'-hexaméthylène-bis-maléimide, le N,N'-4,4'-diphénylméthane-bis-maléimide ou le N,N',N''-tris-maléimide du phosphate de tris-(amino-4 phényle).

7. Mélanges selon la revendication 1, caractérisés en ce qu'ils contiennent, comme poly-($\beta$-imino-crotononitrile) de formule II, le N,N'-4,4'-diphénylméthane-bis-($\beta$-imino-crotononitrile), le N,N'-1,3-phénylène-bis-($\beta$-imino-crotononitrile), le N,N'-1,4-phénylène-bis-($\beta$-imino-crotononitrile), le N,N'-hexaméthylène-bis-($\beta$-imino-crotononitrile), le N,N'-éthylene-bis-($\beta$-imino crotononitrile) ou le N,N'-isophorone bis-($\beta$-imino crotononitrile).

8. Mélanges selon la revendication 1, caractérisés en ce qu'ils contiennent, comme poly-($\beta$-imino-crotononitrile) de formule III, le tris-($\beta$-imino-crotononitrile) de la diéthylène-triamine.

9. Procédé de préparation de produits à base de matières plastiques, insolubles et infusibles, à partir des mélanges durcissables selon la revendication 1, procédé caractérisé en ce qu'on fait réagir ces mélanges à des températures comprises entre 50 et 280°C, éventuellement en présence d'un catalyseur de durcissement.